# EUROPÄISCHE PATENTSCHRIFT

(11) **EP 0 749 886 B1**
(45) Veröffentlichungstag und Bekanntmachung des Hinweises auf die Patenterteilung: **22.12.1999**
(21) Anmeldenummer: 96107324.4
(22) Anmeldetag: 09.05.1996
(51) Int. Cl.: B62D 1/19

(54) **Sicherheitslenksäule**
Safety steering column
Colonne de direction de sécurité

(30) Priorität: 23.06.1995 DE 19522389
(43) Veröffentlichungstag der Anmeldung: 27.12.1996
(73) Patentinhaber: DaimlerChrysler AG, 70567 Stuttgart (DE)
(72) Erfinder: Asbrand, Ulrich, 73630 Remshalden (DE); Class, Jürgen, 75428 Illingen (DE)

(56) Entgegenhaltungen:
- DE-A- 2 315 385
- DE-A- 3 925 989
- FR-A- 2 154 910

## Beschreibung

Die Erfindung betrifft eine Sicherheitslenksäule gemäß dem Oberbegriff des Patentanspruchs 1.

Eine gattungsgemäße Sicherheitslenksäule geht beispielsweise aus der DE 34 27 211 C1 hervor. Die darin offenbarte Sicherheitslenksäule weist als Deformationsglied einen aus zwei teleskopisch zusammenschiebbaren Wellenstücken aufgebauten Lenksäulenabschnitt auf, der bei einem Frontalaufprall axialen Verschiebungsweg und in geringfügigem Maße auch Stoßenergie aufnimmt. Dadurch können in einer ersten Phase nach einem Frontalaufprall der obere Mantelrohrabschnitt der Lenksäule und das Lenkrad in ihrer Einbaulage gehalten werden, was insbesondere für eine optimale Schutzwirksamkeit eines sich entfaltenden Airbags wichtig ist. Anstelle eines durch teleskopisches Zusammenschieben wirkenden Deformationsgliedes kann auch ein Wellrohr als Deformationsglied eingesetzt sein.

Das Deformationsglied kann Verschiebungsweg nur bis zu einem Maximalbetrag aufnehmen, der durch die Länge des Deformationsgliedes begrenzt ist. Danach geht es auf Block und überträgt weiter eingeleitete axiale Kräfte in starrer Verbindung auf das Mantelrohr. Bei engen Bauraumverhältnissen im vorderen Fußraum des Fahrzeugs ist es oft nicht möglich, das Deformationsglied so lang zu bemessen, wie es für einen optimalen Insassenschutz wünschenswert wäre. Bei einem Frontalaufprall würden daher frühzeitig Kräfte von dem sich in Richtung Fahrgastzelle verschiebenden Lenkgetriebe bis in das Lenkrad vordringen. Bricht das Mantelrohr aus seiner Halterung, so kann dies zu einer gefährlichen Verschiebung oder Aufstellung des Lenkrads führen.

Um dieses zu verhindern, ist es bekannt (DE 37 29 155 A1, DE 31 36 634 A1), das Deformationsglied mit einem Ausbrechmechanismus zu versehen, der bei Überschreiten einer bestimmten axialen Kraft, die Welle auseinanderbrechen läßt und somit das Lenkgetriebe mechanisch von der Lenkspindel trennt. Als nachteilig an dieser Lösung kann erachtet werden, daß das Wirksamwerden des Ausbrechmechanismus von vielen schwer kalkulierbaren Faktoren abhängt, so daß insbesondere das Langzeitverhalten schwer abzuschätzen ist.

Desweiteren sind Lenkungsanordnungen bekannt (DE 32 41 839 C1, DE 28 36 788 A1), bei denen ein bauchig aufgeweitetes Aufnahmerohr eines teleskopartigen Deformationsgliedes zugleich eine Sollbiegestelle darstellt, welche bei einem Frontalaufprall neben der teleskopischen Aufnahme von Verschiebungsweg ein Abknicken der Eingangswelle des Lenkgetriebes relativ zur Lenkspindel ermöglicht, wodurch die Einleitung axialer Kräfte durch ein sich in Richtung der Fahrgastzelle bewegendes Lenkgetriebe stark verringert wird. Diese Lösung ist recht aufwendig und macht durch die bauchige Aufweitung zusätzlich Bauraum erforderlich.

Ferner sind mehrgliedrige Sicherheitslenksäulen bekannt (DE 28 53 374 A1, JP 07-117 686), welche ein Deformationselement zur Aufnahme von axialem Verschiebeweg und zusätzlich eine Sollbiegestelle in einer lenkgetriebenahen Zwischenwelle aufweisen. Als nachteilig kann bei diesen Anordnungen angesehen werden, daß der Energieverzehr und die Umlenkung der Kräfte im Falle eines Aufpralls schwer abzuschätzen sind, da die Kräfte über ein Kardangelenk auf die Sollbiegestelle eingeleitet werden. Desweiteren machen die langen, als Hebelarm an die Sollbiegestelle angreifenden Abschnitte der Zwischenwelle die Freihaltung eines vergleichsweisen großen Bauraumes erforderlich, damit bei einem Aufprall die Abschnitte der Zwischenwelle ungehindert abknicken können und nicht vorzeitig auf Block gehen.

Aufgabe der Erfindung ist es, eine gattungsgemäße Sicherheitslenksäule dahingehend weiterzubilden, daß insbesondere wenn aufgrund enger Bauraumverhältnisse nur in geringem Maße axialer Verschiebungsweg nutzbar ist, ein gefährliches Aufstellen der Lenkspindel und des Lenkrades bei einem Frontalaufprall verhindert wird.

Diese Aufgabe wird durch die Merkmale des Anspruchs 1 gelöst. Vorteilhafte Ausgestaltungen der Erfindung gehen aus den Unteransprüchen hervor.

Gemäß der Erfindung wird ein auf Block gehen des Deformationsgliedes verhindert, indem vorher das Lenkgetriebe an der Sollbiegestelle abknickt, so daß bei einer weiteren Verschiebung des Lenkgetriebes in Richtung auf die Fahrgastzelle kaum noch axiale Kräfte in die Lenksäule eingeleitet werden. Ein weiterer Vorteil besteht darin, daß die erfindungsgemäßen Maßnahmen nur eine geringfügige Abänderung der gattungsgemäßen Sicherheitslenksäule erfordern.

Ein Ausführungsbeispiel der Erfindung ist in der Zeichnung dargestellt und wird nachstehend erläutert. Es zeigen:
- Fig. 1a:: eine Seitenansicht der erfindungsgemäßen Sicherheitslenksäule in ihrer Einbaulage,
- Fig. 1b:: die Sicherheitslenksäule gemäß Fig. 1a nach einem Frontalaufprall,
- Fig. 2:: eine Draufsicht der erfindungsgemäßen Sicherheitslenksäule gemäß Fig. 1a mit einer Fangschlinge als Abstützelement.

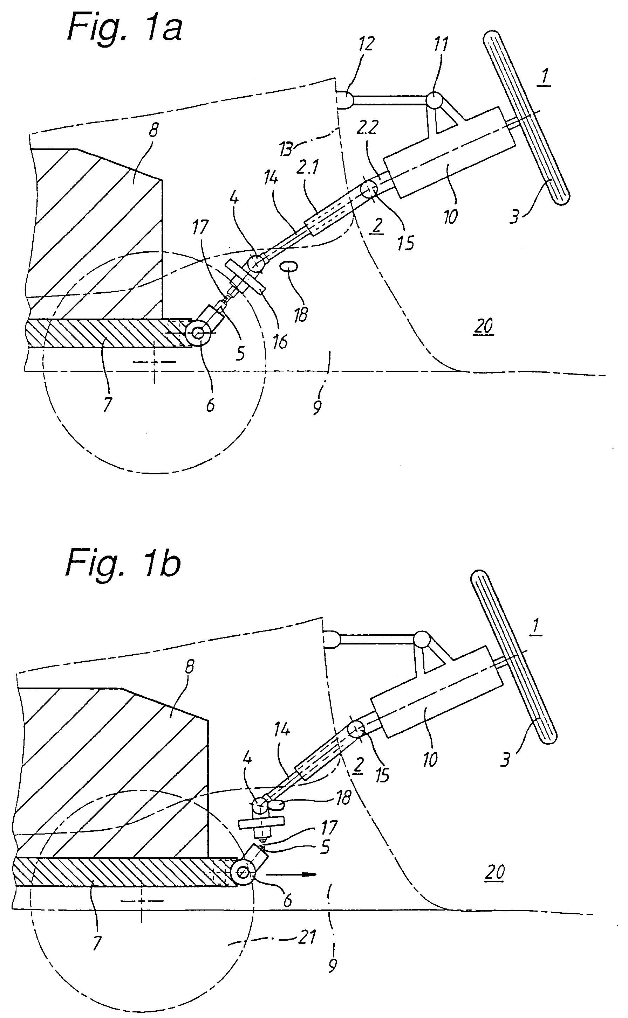

Die in Fig. 1a dargestellte erfindungsgemäße Sicherheitslenksäule 1 umfaßt eine mehrgliedrige Lenkspindel 2, die endseitig einerseits mit einem Lenkrad 3 und andererseits über eine Gelenk 4, insbesondere ein Kreuz- oder Kardangelenk, mit der Eingangswelle 5 eines Lenkgetriebes 6 verbunden ist. In der Zeichnung ist durchgehend eine Zahnstangenlenkung dargestellt, deren Lenkgetriebe 6 an einem Integralträger 7 befestigt ist. Der Integralträger 7 trägt den Motor 8 und ist seinerseits an rechts- und linksseitigen Fahrzeuglängsträgern 9 befestigt. Ohne Weiteres ist die Erfindung auch auf Fahrzeuge mit Blocklenkung anwendbar, wobei die Lenkgetriebe entweder am Integralträger oder an dem lenkradnahen Fahrzeuglängsträger befestigt sein können.

Der lenkradnahe Teil 2.2 der Lenkspindel 2 ist in einem Mantelrohr 10 geführt, welches seinerseits an einem bei einer Frontalkollision weitgehend unbeeinflußten Querträger 11 befestigt ist, wobei es sich zusätzlich über eine Stirnwandabstützung 12 an der Stirnwand 13 des Fahrzeugs abgestützt. Der lenkradnahe Teil 2.2 der Lenkspindel 2 ist mit dem lenkgetriebenahen Teil 2.1, der als Deformationsglied 14 zur Aufnahme von axialem Verschiebungsweg ausgebildet ist, gelenkig verbunden. Diese Verbindung erfolgt gemäß dem dargestellten Ausführungsbeispiel über ein oberes Gelenk 15, weitere Gelenke und Zwischenwellen sind jedoch denkbar.

Das Deformationsglied 14 ist in der Lage durch Aufnahme von axialem Verschiebungsweg die Länge der zwischen Lenkgetriebe 6 und Mantelrohr 10 eingespannten Lenkspindel 2 zu verkürzen. Dies kann durch teleskopisches Zusammenschieben, wie in der Zeichnung dargestellt, oder durch plastische Verformung wie bei einem Wellrohr erfolgen. Das Deformationsglied 14 ist lenkgetriebeseitig über ein Gelenk 4 und eine Lenkungskupplung 16 mit der Eingangswelle 5 des Lenkgetriebes 6 gelenkig verbunden. Die Lenkungskupplung 16 dient dem Anschluß des Lenkgetriebes 6 an die Lenkspindel 2 und der Vibrationsdämpfung, sie ist für das weitere ohne Bedeutung.

Erfindungsgemäß weist die Eingangswelle 5 des Lenkgetriebes 6 eine Sollbiegestelle 17, die im Ausführungsbeispiel durch eine Querschnittsschwächung definiert wird. Andere Realisierungen der Sollbiegestelle sind ohne weiteres denkbar und dem Fachmann als solche bekannt. Ein weiteres vorteilhaftes Merkmal der Erfindung ist ein Abstützelement 18, welches in der Bewegungslinie der bei einem Frontalaufprall sich verschiebenden Lenkspindel 2 angeordnet ist und die Wirkung eines definiert oberhalb des Gelenkes 4 einsetzenden Widerlagers hat. Das Abstützelement 18 ist mit dem Fahrzeugrahmen z.B. über den Fahrzeuglängsträger 9 fest verbunden und bleibt in seiner Lage, anders als die früh an unfallbedingten Verformungen teilnehmende Lenkspindel 2, vom Unfallgeschehen weitgehend unbeeinflußt.

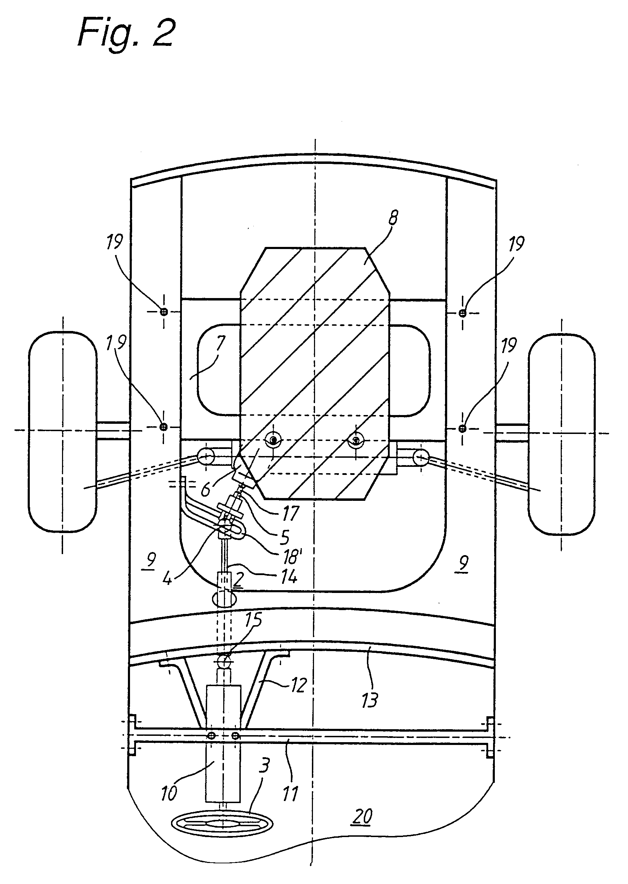

Die Fig. 2 zeigt in der Draufsicht des Fahrzeugs alle wesentlichen Komponenten aus Fig. 1a. Außerdem ist erkennbar, wie der Integralträger 7 mit insgesamt vier Befestigungspunkten 19 an den Fahrzeuglängsträgern 9 befestigt ist. Bei einem starken Frontalaufprall klinkt der Integralträger 7, bedingt durch die hohe träge Masse des Motors 8, an diesen Befestigungspunkten 19 ganz oder teilweise aus und wird in Richtung auf die Fahrgastzelle 20 verschoben, wobei das Lenkgetriebe 6 mitverschoben wird. Desweiteren zeigt die Fig. 2 das Abstützelement 18 in einer Ausbildung als Fangschlinge 18', die am lenkradseitigen Fahrzeuglängsträger 9 befestigt ist. Die Fangschlinge 18' wirkt, wie bereits beschrieben, als Widerlager für die sich unfallbedingt verschiebende Lenkspindel 2 und zusätzlich als Führung, die ein unkontrolliertes Ausbrechen der Lenkspindel 2, welches ihre Schrägstellung zur Folge hätte, verhindert. Dies ist insbesondere bei einem Frontalaufprall mit nur teilweiser Überdeckung von Bedeutung. Anstelle einer Fangschlinge 18' kann auch ein entsprechend angeordneter und hinsichtlich der Führungsfunktion angepaßter Fangbügel, Fanghaken oder eine Fanggabel als Abstützelement eingesetzt werden.

Die Fig. 1b zeigt die Sicherheitslenksäule 1 aus Fig. 1a nach einem Frontalaufprall und dadurch bedingten Verformungen. Durch den Frontalaufprall ist der Integralträger 7 ganz oder teilweise ausgeklinkt und wurde samt Motor 8 und Lenkgetriebe 6 in Richtung der Fahrgastzelle 20 (Pfeil) verschoben. Die Räder 21 werden abhängig von Konstruktion und der Stärke des Frontalaufpralls mit dem Integralträger mehr oder weniger mitverschoben, sind aber der Einfachheit wegen in unveränderter Position dargestellt. Mit der Verschiebung des Lenkgetriebes 6, wird eine axiale, in Richtung des Lenkrades 3 wirkende Kraft in die Lenkspindel 2 eingeleitet, die jedoch gering ist, solange das Deformationselement 14 Verschiebungsweg aufnehmen kann.

Ohne weitere Maßnahmen würde, wenn der Verschiebungsweg vollständig aufgebraucht ist, das Deformationselement 14 auf Block gehen und die Stoßkraft über die starre Verbindung zum Mantelrohr 10 ungedämpft weitergeleitet werden, so daß oberhalb einer kritischen Kraft die Halterung 11, 12 des Mantelrohres 10 den Kräften nicht mehr standhalten könnte. Um dieses zu verhindern, ist erfindungsgemäß die Sollbiegestelle 17 in der Eingangswelle 5 des Lenkgetriebes 6 vorgesehen. Die Sollbiegestelle 17 ist so bemessen, daß einerseits die Lenkkräfte übertragen werden können, andererseits aber die Knickverformung an der Sollbiegestelle 17 einsetzt, bevor die kritische Kraft für die Halterung 11, 12 des Mantelrohres 10 überschritten wird.

Das Deformationsglied 14 und die Sollbiegestelle 17 können so ausgelegt werden, daß bei einer Verschiebung des Lenkgetriebes 6 in Richtung auf die Fahrgastzelle 20, zunächst der axiale Verschiebungsweg des Deformationsgliedes 14 weitgehend aufgebraucht wird, bevor eine Knickverformung der Eingangswelle 5 an der Sollbiegestelle 17 einsetzt. Dies hat den Vorteil, daß das Verbiegen der Eingangswelle 5 des Lenkgetriebes 6 so spät wie möglich einsetzt, so daß die Lenkfähigkeit des Fahrzeugs länger erhalten bleibt.

Ein weiterer Vorteil wird durch das karosseriefeste Abstützelement 18 erzielt, durch das zu einem definierten Zeitpunkt eine Knickverformung an der Sollbiegestelle 17 unterstützt wird. Das Abstützelement 18 ist in der Bewegungslinie der Lenkspindel 2 so angeordnet, daß es ab einer bestimmten Verschiebung des Lenkgetriebes 6 in Richtung auf die Fahrgastzelle 20 als Widerlager am oder oberhalb des Gelenkes 4 einwirkt. Dadurch wird gezielt eine Kraft in die Sollbiegestelle 17 eingeleitet, welche die Knickverformung bewirkt. Das Abstützelement 18 kann beispielsweise am lenkradnahen Fahrzeuglängsträger 9 befestigt sein, wie in Fig. 1b gezeigt, oder an einem anderen Punkt, der weitgehend unbeeinflußt von unfallbedingten Verformungen ist.

Aus den bereits genannten Gründen ist es von Vorteil, das Abstützelement 18 so anzuordnen, daß die Knickverformung an der Sollbiegestelle 17 erst einsetzt, wenn der axiale Verschiebungsweg des Deformationsgliedes 14 weitgehend aufgebraucht ist.

Der Verlauf eines Unfallgeschehens stellt sich nun wie folgt dar: Nach einem Frontalaufprall nimmt zunächst das Deformationsglied 14 Verschiebungsweg auf, während es gleichzeitig um die Drehachse des lenkradnahen oberen Gelenkes 15 schwenkt. Bevor das Deformationsglied 14 auf Block geht, wirkt das Abstützelement 18 als Anschlag für die Schwenkbewegung und als Widerlager bei einer weiteren unfallbedingten Verschiebung des Lenkgetriebes 6, wodurch die Knickverformung an der Sollbiegestelle 17 eingeleitet wird. In Fig. 1b ist der Zustand dargestellt, an dem bereits eine deutliche Abknickung stattgefunden hat.

## Patentansprüche

1. Sicherheitslenksäule für ein Kraftfahrzeug umfassend eine mehrgliedrige Lenkspindel (2), deren lenkradnaher Teil (2.2) in einem Mantelrohr (10) geführt ist, welches an einem bei einer Frontalkollision weitgehend unbeeinflußten Querträger (11) befestigt ist, und deren lenkgetriebenaher Teil (2.1) als Deformationsglied zur Aufnahme von axialem Verschiebungsweg ausgebildet ist und einerseits mit dem lenkradnahen Teil und andererseits mit der Eingangswelle (5) eines Lenkgetriebes (6) gelenkig verbunden ist, **dadurch gekennzeichnet**, daß die Eingangswelle (5) des Lenkgetriebes (6) eine Sollbiegestelle (17) aufweist.

2. Sicherheitslenksäule nach Anspruch 1, **dadurch gekennzeichnet**, daß das Deformationsglied (14) und die Sollbiegestelle (17) so ausgelegt sind, daß bei einer Verschiebung des Lenkgetriebes (6) in Richtung auf die Fahrgastzelle (20) zunächst der axiale Verschiebungsweg des Deformationsgliedes weitgehend aufgebraucht wird, bevor an der Sollbiegestelle (17) eine Knickverformung einsetzt.

3. Sicherheitslenksäule nach Anspruch 2, **dadurch gekennzeichnet**, daß ab einer bestimmten unfallbedingten Verschiebung des Lenkgetriebes (6) in Richtung auf die Fahrgastzelle (20) ein karosseriefestes Abstützelement (18) in der Weise als Widerlager auf die Lenkspindel (2) einwirkt, daß gezielt Kräfte in die Sollbiegestelle (17) eingeleitet werden, welche eine Knickverformung einleiten.

4. Sicherheitslenksäule nach Anspruch 3, **dadurch gekennzeichnet**, daß das Abstützelement (18) so angeordnet ist, daß seine Wirkung als Widerlager erst dann einsetzt, wenn der axiale Verschiebungsweg des Deformationsgliedes (14) weitgehend aufgebraucht ist.

5. Sicherheitslenksäule nach Anspruch 4, **dadurch gekennzeichnet**, daß das Abstützelement (18) so ausgebildet ist, daß mit Einsetzen der Wirkung als Widerlager auch eine Führung der Lenkspindel (2) einsetzt, welche ein unkontrolliertes Ausbrechen verhindert.

6. Sicherheitslenksäule nach Anspruch 5, **dadurch gekennzeichnet**, daß das Abstützelement (18) als Fangschlinge (18') ausgebildet, die am Fahrzeugrahmen, insbesondere am Fahrzeuglängsträger (9) befestigt ist.

7. Sicherheitslenksäule nach Anspruch 2, **dadurch gekennzeichnet**, daß das Abstützelement auf oder oberhalb eines Gelenkes (4) einwirkt, welches die Lenkspindel (2) mit der Eingangswelle (5) des Lenkgetriebes (6) verbindet.

## Claims

1. A safety steering column for a motor vehicle comprising a multiple-member steering spindle (2), part (2.2) thereof close to the steering wheel being guided in a steering column tube (10) secured to a cross bearing (11) which remains largely unaffected in the event of a frontal impact, and part (2.1) thereof close to the steering gear being designed as a deformation member for receiving a length of axial displacement and joined in an articulated design on the one hand to the part close to the steering wheel and on the other to the input shaft (5) of a steering gear (6), characterised in that the input shaft (5) of the steering gear (6) has a set bending point (17).

2. A safety steering column as claimed in claim 1, characterised in that the deformation member (14) and the set bending point (17) are arranged so that if the steering gear (6) is displaced in a direction towards the passenger compartment (20) the axial displacement length of the deformation member is firstly largely used up before a buckling action comes into play at the set bending point (17).

3. A safety steering column as claimed in claim 2, characterised in that after the steering gear (6) has been pushed by a specific distance towards the passenger compartment (20) due to an accident, a supporting element (18) joined to the body acts as a counter-bearing on the steering spindle (2) in such a way that directed forces are transmitted to the set bending point (17), which give rise to a buckling action.

4. A safety steering column as claimed in claim 3, characterised in that the supporting element (18) is so arranged that it does not start to act as a counter-bearing until the axial displacement length of the deformation member (14) has been largely used up.

5. A safety steering column as claimed in claim 4, characterised in that the supporting element (18) is designed so that as it starts to act as a counter-bearing, a guiding action is also applied to the steering spindle (2) which prevents any uncontrolled breaking away.

6. A safety steering column as claimed in claim 5, characterised in that the supporting element (18) is designed as a rebound sling (18') which is attached to the vehicle frame, in particular to the side members of the vehicle (9).

7. A safety steering column as claimed in claim 2, characterised in that the supporting element acts on or above an articulated joint (4) which connects the steering spindle (2) to the input shaft (5) of the steering gear (6).

## Revendications

1. Colonne de direction de sécurité pour un véhicule automobile, comprenant un arbre de direction (2) formé de plusieurs parties, dont la partie (2.2), qui est proche du volant, est guidée dans un tube enveloppe (10) qui est fixé à un support transversal (11) qui est très peu influencé dans le cas d'un choc frontal, et dont la partie (2.1) située à proximité du mécanisme de direction est agencée sous la forme d'un organe de déformation servant à absorber une course axiale de déplacement et est reliée d'une part à la partie proche du volant et d'autre part à l'arbre d'entrée (5) d'un mécanisme de direction (6), caractérisée en ce que l'arbre d'entrée (5) du mécanisme de transmission (6) comporte un point de flexion de consigne (17).

2. Colonne de direction de sécurité selon la revendication 1, caractérisée en ce que l'organe de déformation (14) et le point de flexion de consigne (17) sont agencés de telle sorte que dans le cas d'un déplacement du mécanisme de direction (6) en direction de l'habitacle (20), tout d'abord la course axiale de déplacement de l'organe de déformation est parcourue dans une large mesure avant qu'une déformation de coudage intervienne au niveau du point de flexion de consigne (17).

3. Colonne de direction de sécurité selon la revendication 2, caractérisée en ce qu'a partir d'un déplacement déterminé, dû à un accident, du mécanisme de direction (6) en direction de l'habitacle (20), un élément d'appui (18) solidaire de la carrosserie agit en tant que butée sur l'arbre de direction (2) de telle sorte que des forces, qui déclenchent une déformation de coudage, sont appliquées de façon ciblée au point de flexion de consigne (17).

4. Colonne de direction de sécurité selon la revendication 3, caractérisée en ce que l'élément d'appui (18) est disposé de telle sorte que son action en tant que butée intervient uniquement lorsque la course axiale de déplacement de l'organe de déformation (14) est parcouru dans une large mesure.

5. Colonne de direction de sécurité selon la revendication 4, caractérisée en ce que l'élément d'appui (18) est agencé de telle sorte que lors de son utilisation avec l'effet de butée, il se produit également un guidage de l'arbre de direction (2), qui empêche une rupture incontrôlée.

6. Colonne de direction de sécurité selon la revendication 1, caractérisée en ce que l'élément d'appui (18) est agencé sous la forme d'une boucle de captage (18'), qui est fixée au châssis du véhicule, notamment sur le longeron (9) du véhicule.

7. Colonne de direction de sécurité selon la revendication 2, caractérisée en ce que l'élément d'appui agit sur ou au-dessus d'une articulation (4), qui relie l'arbre de direction (2) à l'arbre d'entrée (5) du mécanisme de direction (6).
